# EUROPEAN PATENT SPECIFICATION

(11) **EP 3 458 645 B1**
(45) Date of publication and mention of the grant of the patent: **04.12.2024**
(21) Application number: 17733542.9
(22) Date of filing: 16.05.2017
(51) Int. Cl.: D21H 11/18, D21H 11/20, D21H 19/34, D21H 19/52, D21H 21/18

(54) **MODIFIED NANOCRYSTALINE CELLULOSE MATERIALS AND FORMULATIONS AND PRODUCTS MADE THEREFROM**
MODIFIZIERTE NANOKRISTALLINE CELLULOSEMATERIALIEN UND FORMULIERUNGEN UND DARAUS HERGESTELLTE PRODUKTE
MATÉRIAUX DE CELLULOSE NANOCRISTALLINE MODIFIÉS ET FORMULATIONS ET PRODUITS FABRIQUÉS À PARTIR DE CEUX-CI

(30) Priority: 16.05.2016 US 201662337014 P
(43) Date of publication of application: 27.03.2019
(73) Proprietor: Yissum Research Development Company of The Hebrew University of Jerusalem Ltd., 91390 Jerusalem (IL); Melodea Ltd., 7610001 Rehovot (IL)
(72) Inventor: BEN SHALOM, Tal, 70300 Beer Yaakov (IL); SHOSEYOV, Oded, Shoham 6080410 (IL); LAPIDOT, Shaul, 9980300 Kibbutz Tzora (IL); AZERRAF, Clarite, Ashdod, 7763247 (IL); NEVO, Yuval, Rechovot, 7634112 (IL)
(74) Representative: Vossius & Partner Patentanwälte Rechtsanwälte mbB
(86) International application number: PCT/IL2017/050550
(87) International publication number: WO 2017/199252

(56) References cited:
- WO-A1-2010/124378
- WO-A1-2011/056135
- WO-A1-2011/073522
- WO-A1-2012/032514
- WO-A1-2014/153645
- WO-A1-2015/168784
- WO-A2-2007/027224
- US-A1- 2015 041 089

## Description

### INTRODUCTION

Cellulose is the most abundant biopolymer on earth. Traditionally, cellulose is used for clothing, construction, furniture and paper making.

The most complex form of cellulose in nature is in cell walls of plants where it appears as a composite with other polysaccharides such as hemicellulose and pectin, and with lignins, enzymes and structural polymeric proteins. These polymer composites ordered in unique architectures result in high load transfer when cells are subjected to mechanical stress, and at the same time provide a physical barrier against pathogen attack.

Nanocrystalline cellulose (NCC) is obtained under controlled conditions that lead to formation of high-purity single crystals. These crystals display extremely high mechanical strength that is equivalent to the binding forces of adjacent atoms. NCC modulus is estimated around 150 GPa and their tensile strength is estimated around 10 GPa, similarly to super strong materials such as aramid fibers (Kevlar) and carbon fibers. NCC produced by H₂SO₄ is particularly interesting. During the hydrolysis process, the cellulose nano particles are charged with sulfate groups and form stable liquid crystal suspensions.

Cotton is an important natural fiber due to its outstanding comfort properties. One of the main disadvantages of cellulosic fibers is the lack of dimensional stability. At the beginning of the twentieth century, easy care finishes were developed for cellulose based textiles. The discovery of the effect of formaldehyde reacting with cellulose was the basis for the development of finishes for easy care properties of textiles: easy care, easy to iron or no iron, wash and wear, crease resistant, shrink proof, wrinkle resistant, etc. Since the late 1980s the textile industry has been searching for formaldehyde-free crosslinking agents, which have been identified to have a negative impact on human health and the environment, and their industrial use requires significant investment in ensuring safe handling.

Carboxylic acids were found to be good cellulose crosslinking agents, whereas the polycarboxylic acid 1,2,3,4-butanetetracarboxylic acid (BTCA) was found to be one of the best performing polycarboxylic acids [1-5].

Sodium hypophosphite (NaH₂PO₄) is a most effective catalyst for catalyzing a reaction with BTCA. Sodium phosphate can also serve as a catalyst but not as well as sodium hypophosphite.

This method serves the textile industry for crosslinking of cotton cellulose to improve anti-pilling, wrinkle recovery, antimicrobial, water repellent and flame retardant properties of the cotton fabric.

To improve or alter the mechanical properties of foam materials composed of nanocrystaline cellulose (NCC), the nano-material was crosslinked via linking molecules such as 1,2,3,4-butane tetracarboxylic (BTCA) [6]. However, the production of thin films and coating materials of crosslinked NCC was not achieved.

### PUBLICATIONS

**1.** Welch, C.M., Taxtile Research Journal, Vol 58, No. 8, August 1988, p480.
**2.** Welch, C.M. and B.A.K. Andrews, Taxtile Chemist and Colorist, Vol. 21, No. 2, February 1989, p13.
**3.** Yang, C.Q, Journal of Polymer Science Part A: Polymer Chemistry, 10.1002/pola.1993.080310514, April, 1993.
**4.** Lee, E. U. I. S. O., & Kim, H. J. E,. Durable Press Finish of Cotton / Polyester Fabrics with 1, 2, 3, 4-Butanetetracarboxylic Acid and Sodium Propionate, (September 2000), 654-661, 2001.
**5.** Yang, C. Q., Wei, W., & Lickfield, G. C., Mechanical Part I: Effects of Acid Strength of Durable Press Finished Cotton Fabrics Degradation and Crosslinking of Cellulose by Polycarboxylic Acids crosslinking, 865-870, 1998.
**6.** WO 2012/032514

### SUMMARY OF THE INVENTION

It is to be understood that the present invention is as defined by the claims.

Herein, the inventors provide a methodology which permits modulation, attenuation or tuning of at least one property, being chemical, mechanical or optical, of nanocrystalline cellulose (NCC) films or coatings comprising or consisting same, for the purpose of achieving improved NCC-based materials and products, mainly such having at least a region of their surface coated with a film or a coat of the modified NCC.

The methodology presented herein has been developed and applied to the manufacture of coatings for different substrates, e.g., polycarbonate, glass, polypropylene, as well as to the manufacture of thin NCC films, which differ substantially from thick composite materials.

As demonstrated hereinbelow, the modulation, attenuation or tuning of one or more property of NCC by the proposed methodology involves reacting NCC with one or more materials that provide NCC-based materials, which are different from NCC that has not been so reacted or modified, and/or involves formulating or composing NCC into a formulation or a composition or a mixture that provides products with improved properties. The properties of the NCC-based materials of the invention, as well as of the NCC formulations or compositions of the invention, have been tailored for achieving improved solid films or coatings when the materials or formulations are applied onto a surface. For certain applications, improved NCC films or coatings may be achieved by mixing NCC with at least one other material, an additive, that together with the NCC and in its presence form into a film or a coating with improved properties. For other applications, the improved properties have been achieved by chemically reacting NCC with at least one other material, an additive, that undergoes chemical interaction with the NCC to provide NCC-based materials with improved properties.

While the methodology disclosed herein may be utilized for modulating, attenuating or tuning certain properties of NCC, the methodology may also provide means for endowing a film or a coating made of NCC or NCC-based material(s) with at least one property which films consisting essentially of NCC do not exhibit.

In accordance with the present invention, the methodology provides also for modulation, attenuation or tuning of any one mechanical, chemical or physical property of an NCC film, and further modulation, attenuation or tuning of any one optical property thereof. The inventors of the present invention have identified the means/conditions permitting the tailoring of solid films, coatings or layers that exhibit high resistance to water, and thus may be used as oxygen barrier films under low as well as extreme humidity conditions, as well as the means/conditions which permit production of solid films, coatings or layers that exhibit water absorbance. These means and conditions enable the production of NCC films which reactivity to water varies from highly water resistant to highly water absorbing.

The methodology being at the core of the invention disclosed herein, as depicted in **Scheme 1** below, involves formulating NCC with an additive composition consisting at least one -OH rich material and at least one hygroscopic material, at a ratio of between 0:1 and 1:0 (w/w), respectively, and optionally in the presence of at least one catalyst and at least one crosslinking agent. The formulation, when applied onto a surface region of a substrate, provides a film that is water resistant or water absorbing or a film that is only partially water absorbing, depending on the nature and composition of the additive composition, namely depending on the ratio between the at least one -OH-rich material and the at least one hygroscopic material.

It is to be understood that the explantions provided here are not intended to define the scope of the present invention. Instead, the scope of the present invention is as defined in the claims.

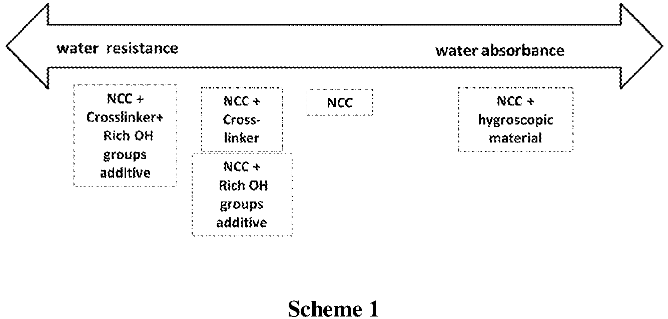

Thus, in a first aspect there is provided a method as defined in claim 1.

The method of the invention alternatively provides the means to modify a surface property of the substrate (material) within said at least region thereof, thereby inducing or varying a surface property without affecting any structural or phase state modification of the material within said at least one region.

In the present invention, the surface property being modifyied is the oxygen transmittance rate. Disclosed herein for reference is a formulation for use in a method of the
invention; the formulation comprising NCC, an additive composition and optionally at least one catalyst and at least one crosslinking agent; the additive composition consisting at least one OH-rich material and at least one hygroscopic material in a ratio from between 0:1 to 1:0 (w/w). In some embodiments, the additive composition comprises at least one solvent or liquid carrier selected to solubilize said at least one OH-rich material and said at least one hygroscopic material in the selected ratio.

The ratio characterizing the relative amounts of the at least one OH-rich material and the at least one hygroscopic material in an additive composition utilized according to the invention, stands to indicate a spectrum of quantities of each of the two components. A ratio of "0:1" refers to an additive composition comprising zero amount of the at least one OH-rich material and the presence of 100% of the at least one hygroscopic material. Similarly, the ratio "1:0" refers to an additive composition comprising only (100%) of the at least one OH-rich material and zero amount of the at least one hygroscopic material. The ratio between the two components may also be 1:1, namely they may be present in equal amounts.

In some embodiments, the additive composition may comprise an amount of each of the two components such that the ratio between them may be:
0.01:1, 0.1:1, 1:1, 1:0.1, 1:0.01 (at least one OH-rich material: at least one hygroscopic material).

The formulation may comprise at least one solvent or liquid carrier capable of solubilizing, dispersing or otherwise permitting suspension of the formulation components. In some embodiments, the at least one solvent or liquid carrier is selected from an alcohol such as ethanol, DMSO, ethyl acetate and water. The at least one solvent or liquid carrier may alternatively be an electrolyte-rich liquid medium. In some embodiments, the solvent or liquid carrier is water. In some embodiments, the solvent or liquid carrier is an electrolyte-rich liquid medium.

Depending on the intended purpose of a formulation of the invention, the additive composition may be tailored. In some embodiments, where a water absorbing film, or a water retaining film is desired, the formulation of the invention may comprise NCC and at least one hygroscopic material in accordance with claim 1.

To obtain a film of minimal hygroscopicity, or complete water resistance, the amount of said at least one hygroscopic material may be reduced to a minimum
while the relative amount of the at least one OH-rich material may be increased. Thus, in some embodiments, the formulation may comprise an additive composition, wherein the at least one OH-rich material and at least one hygroscopic material are present in equal amounts.

Crosslinking of the OH-rich material to the NCC may utilize at least one catalyst and/or at least one crosslinking agent. Such crosslinking may result from a reaction between the OH-rich material and the NCC and between the OH-rich molecules.

To modify resistance to water, at least one hygroscopic material is added to a formulation of the invention.

By utilizing the methodology of the invention, existing and known properties of NCC films may be ***modified, attenuated or tuned.*** In other words, any one measurable property of an NCC film may be changed in order to achieve an improved property relative to that measured in an unmodified NCC film. The improved property may result from endowing a new property to the NCC film, to diminishing or rendering unsubstantial at least one property of the NCC film, to strengthening or rendering substantial one or more property of the NCC film, all being in comparison to an NCC film that has not been modified in accordance with the invention. Thus, NCC films of the invention are high quality NCC films, exhibiting enhancement in at least one property in comparison to regular NCC films. The improved or enhanced properties may be selected, *inter alia,* from transparency, oxygen transmittance rate (OTR), mechanical stability under folding, hygroscopicity, hydrophobicity, resistance to decomposition or swelling in water or under high humidity conditions, and others. For example, NCC films of the invention exhibit a transparency which is much greater as compared to films consisting NCC only or NCC films made according to existing art. The high transparency comes into play not only in the ability to achieve improved coatings which substantially do not affect transparency of a substrate, or a surface onto which the coating is formed, but also in the ability to modify the mechanical, physical or chemical characteristics of surface regions of substrates without affecting their transparency.

In the present invention, the property being modifyied is the oxygen transmittance rate.

Also, crosslinked NCC films do not break when in water, while uncrosslinked films do; they absorb less water than uncrosslinked NCC films. Uncrosslinked NCC films comprising at least one hygroscopic material absorb more water and break; while crosslinked films comprising at least one hygroscopic material absorb and hold water without breaking.

The films obtainable by the present invention appear uniformly birefringent with long-range nematic order. This highly unique alignment induced in NCC, for example, by reacting NCC with BTCA, has not been achieved in the past. The crosslinked NCC films were nematic, whereas the order in the NCC films of the art were chiral nematic.

As known in the art, NCC are elongated crystalline rod-like nanoparticles.

In some embodiments, the cellulose nano-material is characterized by having at least 50 percent crystallinity. In further embodiments, the cellulose nano-material is monocrystalline.

In some embodiments, the cellulose nano-material, produced as particles (e.g., fibrils, or in other cases as crystalline material) from cellulose of various origins is selected to be at least about 100 nm in length. In other embodiments, they are at most about 1,000 microns in length. In other embodiments, the nanoparticles are between about 100 nm and 1,000 microns in length, between about 100 nm and 900 microns in length, between about 100 nm and 600 microns in length, or between about 100 nm and 500 microns in length.

In some embodiments, the NCC nanoparticles are between about 100 nm and 1,000 nm in length, between about 100 nm and 900 nm in length, between about 100 nm and 800 nm in length, between about 100 nm and 600 nm in length, between about 100 nm and 500 nm in length, between about 100 nm and 400 nm in length, between about 100 nm and 300 nm in length, or between about 100 nm and 200 nm in length.

The thickness of the cellulose nano-material may vary between about 5 nm and 50 nm.

The fibrils of the cellulose nano-material may be selected to have an aspect ratio (length-to-diameter ratio) of 10 and more. In some embodiments, the aspect ratio is between 20 and 200.

The NCC is not nanofibrillated cellulose (NFC).

In some embodiments, the NCC is selected to be between about 100 nm and 400 nm in length and between about 5nm and 30 nm in thickness.

The NCC may be prepared according to methods known in the art, including those disclosed in WO 2012/014213, or any US or non-US national application, herein incorporated by reference.

In order to tune the properties of a film of NCC towards high water absorbance, for applications that require absorbance and holding of water, NCC is formulated with at least one hygroscopic material. The ***"hygroscopic material"*** is selected amongst materials or combination of such materials that attract and hold water. These materials are selected from cellulosic materials, carbohydrates, alcohols such as ethanol and others, acids such as sulfuric acid and inorganic salts, such as chloride salts. In some embodiments, the at least one hygroscopic material may be selected from hygroscopic salts, such as chloride salts (e.g., CaCl₂, LiCl, NaCl and others),
cellulose carboxylates (such as carboxymethyl cellulose) and oxidized cellulose.

Disclosed herein for reference are furthermore silica (micron size and fumed, not nanoparticulate silica), alumina (not in a nanoparticulate form), magnesia, magnesium-silicon compounds (such as Sepiolite), water absorbing polymers (such as poly (acrylic acid), polyacrylamide, poly(sulfoacrylates) and others).

At least one plasticizer or at least one other additive such as a coloring agent, a surfactant, and others may also be formulated with NCC to endow the final film or coat with one or more improved or new properties.

To increase water resistance, the additive composition comprises or consists at least one OH-rich material, namely at least one organic compound having three or more -OH groups, the OH groups may be alcohol groups or carboxylic acid groups. In some embodiments, the OH-rich material is mixed or formulated with the NCC. In other embodiments, the OH-rich material is allowed to react with the NCC to afford a crosslinked NCC material. Crosslinking of NCC in the presence of one or more OH-rich material, selected from sorbitol, polyvinyl alcohol (PVOH), polycarboxylate ether, carbohydrates, and borax, leads to the creation of a network in which NCC particles are associated to one another and further to the OH-rich material, e.g., via covalent bonding. In the crosslinked product, the OH-rich material not only associates to the NCC but also to other molecules of the material, thereby improving the properties of a film or a coating formed from the crosslinked material, and further tuning and improving the film or coat interaction with water. The crosslinked networks of NCC and the OH-rich material show better oxygen barrier properties, mainly in humid and highly humid conditions, in which unmodified, e.g., non-crosslinked films fail.

Without wishing to be bound by theory, the association between the OH-rich material and the NCC may be in a form covalent bonding, hydrogen bonding and/or van-der Waals bonding.

In some embodiments, water-resistant NCC is formed by reacting NCC with a crosslinking agent, and further in the presence of at least one OH-rich material and optionally any other additive that may also crosslink to the NCC. In accordance with the invention, NCC crosslinking was achieved with a crosslinking agent selected from homo-functional, hetero-functional and photoreactive crosslinking agents. In some embodiments, the crosslinking agent is selected amongst homo-functional agents, namely those having identical reactive groups. In some embodiments, the crosslinking agents are selected from hetero-functional agents, namely those which possess two or more different reactive groups and can be used to link dissimilar functional groups. In some embodiments, the crosslinking agent is selected from photoreactive crosslinking agents or free-radical forming agents.

Non-limiting examples of such crosslinking agents include polycarboxylic anhydrides, polycarboxylic acids, citric acid, polyacrylic acid, acrylic acid, acrylates monomer (by a free radical reaction), acrylates prepolymers (by a free radical reaction), oxidized cellulose, carboxymethyl cellulose, epoxides (such as diglycidyl ether), polyurethanes prepolymers, formaldehyde, glyoxal, glutaraldehyde, α-hydroxy hexanedial, formamide, acetamide, N,N-methylene diacrylamide, and others.

In some embodiments, a polycarboxylic acid was used as the crosslinking agent. The polycarboxylic acid is an organic material constructed of a carbon chain and two or more carboxylic acid (-COOH) groups, which may be directly associated (bonded) to the carbon chain or may be pendant therefrom. In some embodiments, the polycarboxylic acid is selected amongst di-, tri-, tetra, penta-, hexa-, hepta-, octa- or higher carboxylic acids.

In some embodiments, the polycarboxylic acid is a dicarboxylic acid, a tricarboxylic acid or a tetracarboxylic acid.

In some embodiments, the polycarboxylic acid is a tetracarboxylic acid.

In some embodiments, the tetracarboxylic acid is BTCA.

As noted herein, a formulation according to the invention ***"optionally comprises at least one catalyst* ".** In other words, the formulation may comprise in addition to NCC, the additive composition and a solvent or a liquid carrier, may further comprise at least one catalyst.

In some embodiments, the formulation may further comprise at least one catalyst. The formulation further comprises at least one crosslinking agent.

Crosslinking is carried out in the presence of at least one OH-rich material, which may optionally be a polymeric material. In some embodiments, the OH-rich material is PVOH. In some embodiments, the OH-rich material is at least one carbohydrate. In some embodiments, the OH-rich material is sorbitol, xyloglucan, or starch. In some embodiments, the polyol may be borax.

In some embodiments, the crosslinking agent is reacted with NCC in the presence of at least one catalyst. The at least one catalyst may be selected to be capable of catalyzing a reaction between NCC functional groups, mainly hydroxyl groups, and a group on the crosslinking agent and/or a group on the OH-rich material.

The at least one catalyst may be selected from perchloric acid, H₂SO₄, H₃PO₄, HCl, para-toluenesulfonic acid, N,N-di-methylpyridine and sodium hypophosphite (SHP).

For some applications, BTCA (optionally in combination with NaH₂PO₄ (SHP) as a catalyst) was used to crosslink NCC and attenuate its properties. The combination of a crosslinking system with NCC resulted in products with unexpected high performance, e.g., unexpected enhancement in the mechanical properties, water resistance and flame retardation properties and thus may be useful in the manufacture of a variety of products, including composites, adhesives, coatings, films and textile. Similarly, NCC/BTCA/SHP was used to significantly reinforce cellulose fibers such as cotton or any other fiber.

In some embodiments, a film of crosslinked NCC is provided, wherein in the film NCC nanoparticles are associated to each other via at least one OH-rich material. In some embodiments, the OH-rich material is a polycarboxylic acid, e.g., BTCA. In some embodiments, the crosslinking agent is different from BTCA.

Crosslinked NCC-based solid products may be selected from films, coatings and fibers. The products are not NCC composites.

In some embodiments, the product is a crosslinked NCC film .

In some embodiments,
the NCC nanoparticles are associated to each other via polycarboxy groups.

In some embodiments, the film is a standalone film having a thickness of between 10 and 1000 µm.

In some embodiments, in a film or coating , the density of NCC particles is between about 1.5 and 1.6 g/cm³.

In some embodiments, the transparency of a crosslinked film is greater than 80%, depending on the film thickness.

In some embodiments, the film is a coat on a surface region of a substrate. The surface of a substrate may be of the same material as the substrate material or may be of a different material (in case where the substrate is coated with a film or a layer of a different material). Notwithstanding the chemical composition difference between the surface and the substrate, the surface is regarded as a region of the top-most exposed material region of a substrate. The film of a crosslinked NCC may be formed on any material, including metallic materials (metals or materials comprising metals), oxides, glass, silicon-based materials, ceramic materials, polymeric materials (e.g. polycarbonate, BOPP, PET), hybrid materials, biomimetic material, biomaterials, dielectric crystalline or amorphous materials, oxide, fibers (e.g. cotton, glass fibers), paper, a combination of some of the listed materials (e.g. metallized PET, paperboards containing laminated plastic layers and pulp), and others. In some embodiments, an NCC film being either water absorbing or water resistant is formed onto a preformed film consisting NCC.

In some embodiments, the crosslinked NCC is formed on a cellulose material. In some embodiments, the cellulose material is a fiber material. In some embodiments, the fiber is a cotton fiber, e.g., any cotton fiber utilized in the textile industry or in the production of yarns which may comprise or consist at least one cotton fiber.

The stability and uniqueness of films obtained by the invention (namely those being water absorbing or water resistant) have been tested and determined by measuring the amount of gaseous oxygen that passes through a film or coat of the invention over a given time period and under varying humidifies. The oxygen transmission rates (OTRs) of various films are summarized in **Table 1** below:

**Table 1: Comparative OTR of various films. *All samples are coated on a 30µm corona treated BOPP film. The Oxygen Transmission Rate (OTR) performed by ASTM: D3985 and F1927_50 - Standard Test Method for Oxygen Gas Transmission Rate Through Plastic Film and Sheeting Using a Coulometric Sensor. Device by MOCON, Models: OXTRAN 2/21 and 1/50.**

| **Sample*** | **Test Conditions (Tempe rature/%Humidity)** | **OTR (cc/(m²*day*atm))** |
|---|---|---|
| BOPP film | 23°/0 RH | >1500 |
| BOPP +NCC | 23°/0 RH | 1.02 |
| BOPP +NCC/Xyloglucan 1:4 | 23°/0 RH | 1.23 |
| BOPP +NCC/Starch 1:4 | 23°/0 RH | 4.80 |
| BOPP +NCC/Starch 1:1 | 23°/0 RH | 1.13 |
| BOPP +NCC/Crosslinker 1:0.066 | 23°/0 RH | 0.94 |
| BOPP +PVOH 5% | 23°/0 RH | 27.76 |
| BOPP +NCC/Crosslinker/PVOH 1:0.066:1 | 23°/0 RH | 0.20 |
| BOPP +NCC | 23°/50 RH | >300 |
| BOPP +NCC/Starch 1:1 | 23°/50 RH | 9.14 |
| BOPP +NCC/Crosslinker 1:0.066 | 23°/50 RH | 60.16 |
| BOPP +PVOH 5% | 23°/50 RH | 26.21 |
| BOPP +NCC/Crosslinker/PVOH 1:0.066:1 | 23°/50 RH | 0.35 |
| BOPP +NCC /PVOH 1:1 | 23°/50 RH | 2.02 |
| BOPP+NCC/fumed silica 1:0.05 | 23°/50 RH | >1000 |

As **Table 1** indicates, NCC coating on a BOPP film reduced the OTR from >1500 cc/(m²*day*atm) to ~1 cc/(m²*day*atm) at 0% relative humidity, as was already indicated in WO2017/046798. Formulating NCC with carbohydrate additives such as starch and xyloglucan, as well as crosslinking the NCC using a polycarboxylic acid, did not significantly change the OTR values at 0% relative humidity. However, using PVOH as an additive resulted in a decrease in the OTR value of the coated BOPP, while crosslinked formulation of NCC and PVOH reduced the OTR value even further.

At higher relative humidity levels (50%) the differences in OTR values were more significant. NCC coating showed a very high OTR (>300 cc/(m²*day*atm)). Crosslinked NCC improved the OTR value by an order of magnitude, while using additives such as starch and PVOH further improved the barrier capabilities by another order of magnitude. Crosslinked formulations of NCC and PVOH showed a very low OTR value of 0.35 cc/(m²*day*atm) at 50% RH.

In contrast to the improved OTR values of formulations of NCC and OH-rich materials, using hygroscopic materials, such as fumed silica, resulted in a significant increase in OTR values, an observation attributed to water absorbance by the film, which greatly hindered its barrier properties.

The same properties are shown when NCC was formulated with a hygroscopic material to form a self-standing film. The film had significantly higher water absorbance as compared to an NCC self-standing film. Without a crosslinker that promotes crosslinking, the film quickly deformed, softened and eventually dissolved, due to water molecules penetrating and interfering with hydrogen bonding present between NCC particles. Crosslinked films, however, remained stable in water and did not dissolve.

The following formulations and solid films may thus be formed:
1. A formulation comprising NCC and xyloglucan;
2. A formulation comprising NCC and starch;
3. A formulation comprising NCC and at least one crosslinking agent as selected herein, being in some embodiments BTCA;
4. A formulation comprising NCC, at least one crosslinking agent as selected herein, being in some embodiments BTCA; and PVOH;
5. A formulation comprising NCC and PVOH;
6. A formulation comprising NCC and fumed silica;
7. A solid film comprising NCC and xyloglucan;
8. A solid film comprising NCC and starch;
9. A solid film comprising NCC crosslinked with BTCA;
10. A solid film comprising NCC crosslinked, in some embodiments with BTCA; and PVOH;
11. A solid film comprising NCC and PVOH;
12. A solid film comprising NCC and fumed silica;
13. A solid film comprising NCC and xyloglucan having OTR of between 1 and 2, when measured at rt (23°) and 0% relative humidity;
14. A solid film comprising NCC and starch, having an OTR between 1 and 5, when measured at rt and 0% relative humidity; and having an OTR below 10, when measured at rt and 50% relative humidity;
15. A solid film comprising NCC crosslinked with BTCA, having an OTR lower than 1, or between 1 and 2, when measured at rt and 0% relative humidity; and having OTR of about 60 when measured at rt and 50% humidity;
16. A solid film comprising NCC crosslinked, in some embodiments with BTCA; and PVOH, having an OTR lower than 1 or between 1 and 2, when measured at rt and 0% relative humidity; and having an OTR lower than 1, or between 1 and 2, or between 0 and 0.5, when measured at rt and 50% relative humidity;
17. A solid film comprising NCC and PVOH, having an OTR lower than 30, when measured at rt and 0*%* relative humidity; and when measured at 50*%* relative humidity;
18. A solid film comprising NCC and fumed silica.

These are only according to the invention in as far as they fulfill the requirements of claim 1. In all above films, OTR was measured according to ASTM: D3985 and F1927_50 - Standard Test Method for Oxygen Gas Transmission Rate Through Plastic Film and Sheeting Using a Coulometric Sensor. Device by MOCON, Models: OXTRAN 2/21 and 1/50.

These results support a method for modifying properties of a solid film of NCC, as measured by the OTR test, thereby further enabling modifying surface properties. The surface properties may be tailored or modified by forming a film as disclosed herein on a surface region. The properties may be any one or more of diminishing or tuning material affinity, wettability, adhesion, adsorption, absorption, encapsulation, hygroscopicity, bonding, friction and agglomeration. In the present invention, the property being modifyied is the oxygen transmittance rate. As such, the surface region may be of any product which surface properties are to be modified or controlled. Such products may be products used in medicine, in engineering, in optics, etc. The products may be selected from implants, biosensors, biomedical devices, contact lenses, glass, plastics or paper.

In some embodiments, the core (substrate) is a cotton fiber or any cellulosic fiber including modified cellulose such as viscose.

In some embodiments,
the crosslinked NCC may be chemically associated with the substrate or with any part thereof. In some embodiments, where the substrate is a cotton substrate or a cotton fiber, the crosslinked NCC formed on its surface is associated therewith via chemical bonds selected from covalent bonds, hydrogen bonds, ionic bonds or any other bond interaction.

A crosslinked NCC may be formed by a
process comprising treating NCC with at least one OH-rich material or at least one crosslinking agent, as disclosed herein, under conditions permitting association between the NCC and said OH-rich material and/or crosslinking agent.

The process can be carried out in the presence of at least one catalyst.

In some embodiments, the catalyst is an acid. In some embodiments, the catalyst is a base. In other embodiments, the catalyst is SHP.

In some embodiments, a process for preparing a formulation used in the invention involves at least one heating step. Depending on the nature and constitution of the formulation to be prepared, and the eventual film to be formed, the process may be carried out at room temperature (rt, 25-30°C) or at a temperature above rt. In some embodiments, the process is carried out at a temperature above 30°C, above 35°C, above 40°C, above 45°C, above 50°C, above 55°C, above 60°C, above 65°C, above 70°C, above 75°C, above 80°C, above 85°C, above 90°C, above 95°C, above 100°C, above 105°C, above 110°C, above 115°C, above 120°C, above 125°C, above 130°C, above 135°C, above 140°C, above 145°C, above 150°C, above 155°C, above 160°C, above 165°C, above 170°C, above 175°C, above 180°C, above 185°C, above 190°C, above 195°C, above 200°C, above 205°C, above 210°C, above 215°C, above 220°C, above 225°C, above 230°C, above 235°C or above 240°C.

In some embodiments, the process is carried out at 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, 235°C or at 240°C.

In some embodiments, the process is carried out at a temperature between 30°C and 40°C, between 45°C and 55°C, between 60°C and 70°C, between 75°C and 85°C, between 90°C and 100°C, between 105°C and 115°C, between 120°C and 130°C, between 135°C and 145°C, between 150°C and 160°C, between 165°C and 175°C, between 180°C and 190°C, between 195°C and 205°C, between 210°C and 220°C, between 225°C and 235°C or between 240°C and 250°C.

In some embodiments, the process is carried out at a temperature between 30 and 180°C.

A film or a coat formed on a surface region may be applied thereto by any method of application known in the art. In some embodiments, NCC and the additive composition as well as the crosslinking agent, and optionally at least one catalyst, may be formed into a formulation or a dispersion or a suspension which may be applied onto a surface region. Depending on the mode of application or the means by which the film is formed, the formulation, dispersion or suspension may be contained and used. In some embodiments, the formulation or a dispersion or a suspension may be mixed together as a medium into which a substrate to be coated is introduced. In some other embodiments, the formulation or a dispersion or a suspension may be contained under conditions permitting spraying of the formulation or a dispersion or a suspension on the surface. In further embodiments, the formulation or a dispersion or a suspension may be applied to the surface region by wetting, brushing, dipping, roll coating, R2R, S2S, industrial paper coating or plastic coating instruments or by any other method known in the art for forming films on solid surfaces.

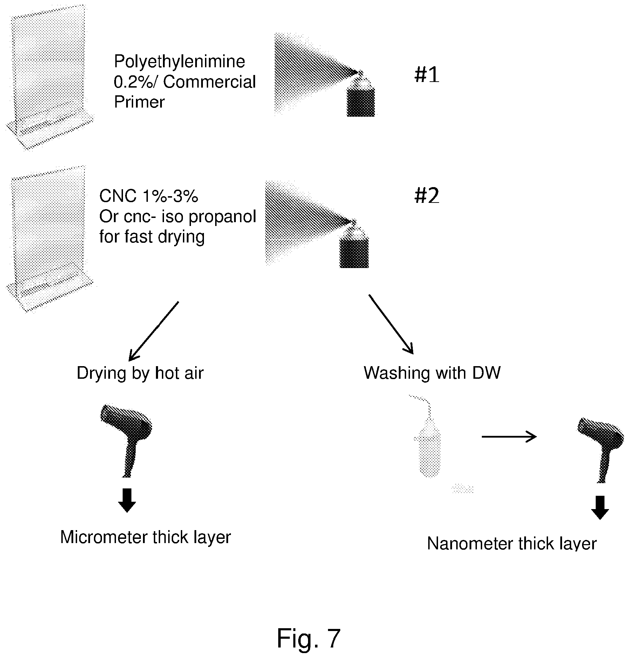

In some embodiments, the formulation or a dispersion or a suspension may be sprayed on a surface region as depicted in **Fig. 7** and exemplified herein. For the purpose of spraying, the formulation or a dispersion or a suspension may be formed into a sprayable formulation that is contained in a spray canister and fitted to deliver an amount of its fluid content. The spray canister or bottle may use a positive displacement pump that draws fluid up a siphon tube from the bottom of the bottle and forces it through a nozzle. The nozzle may be adapted or engineered to deliver the fluid as an aerosol or a mist onto a surface region to form the film.

In some embodiments, the spray bottle may dispense its content by the user's efforts or under pressure. In some embodiments, the formulation of NCC and the additive further comprises a propellant gas to increase the pressure within the bottle and more easily spray the bottle fluid content.

In some embodiments, a substrate to be coated with the NCC formulation is placed (e.g., by immersion) into a formulation of choice, permitting an interaction thereof with the substrate to provide a coating on its surface. In some embodiments, the substrate is removed from the solution and the coat or film formed on a surface of the substrate is permitted to dry.

In some embodiments, the film is formed on a surface of a substrate that has been pre-treated to induce or permit or hasten association of the surface and the NCC film. Pre-treatment may be achieved by any such process known in the art, including without limitation solvent or chemical washing or physical washing, etching, heating, plasma treatment, UV-ozone treatment, corona discharge, laser or microwave irradiation, flash lamp (Xenon) electroless plating, coating by a protective or primer layer, or any combination thereof.

In some embodiments, the processes of the invention are carried out in the presence of a catalyst at rt. In some embodiments, the processes of the invention are carried out in the presence of a catalyst at a temperature above rt. In some embodiments, the processes of the invention are carried out in the absence of a catalyst at rt. In some embodiments, the processes of the invention are carried out in the absence of a catalyst at a temperature above rt.

In some embodiments, the polycarboxylic acid is BTCA and the catalyst is SHP. In some embodiments, the polycarboxylic acid is BTCA, the catalyst is SHP and the substrate is a flat substrate. In some embodiments, the organic polycarboxylic acid is BTCA, the catalyst is SHP and the substrate is a cotton fiber. In some embodiments, the polycarboxylic acid is BTCA, the catalyst is SHP and the process is carried out at rt or at a temperature above rt.

As described above BTCA/SHP is commonly used as crosslinking agent in the cellulose textile industry. Nevertheless, it was shown that BTCA can hinder the fibers. Wei et al [5] reported that the crosslinking process of cotton fabric using BTCA significantly reduced the mechanical strength; this major disadvantage was caused by acid degradation. Combination of NCC with BTCA during the crosslinking process not only provides a solution to this problem, but also significantly improves the mechanical properties of the cotton fabric.

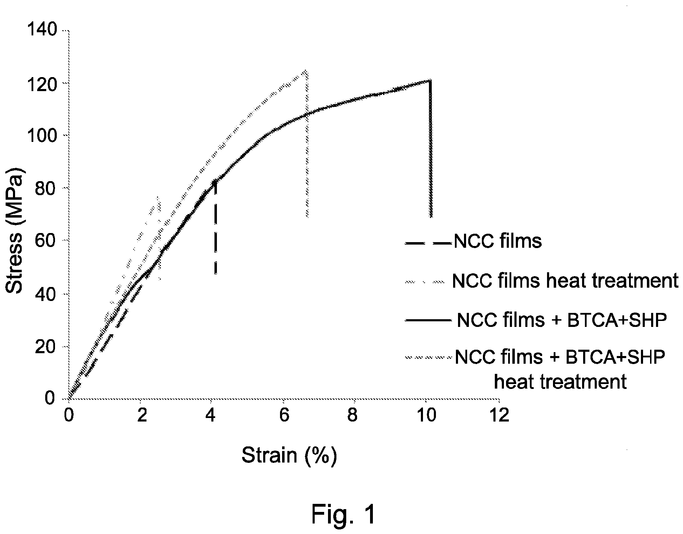

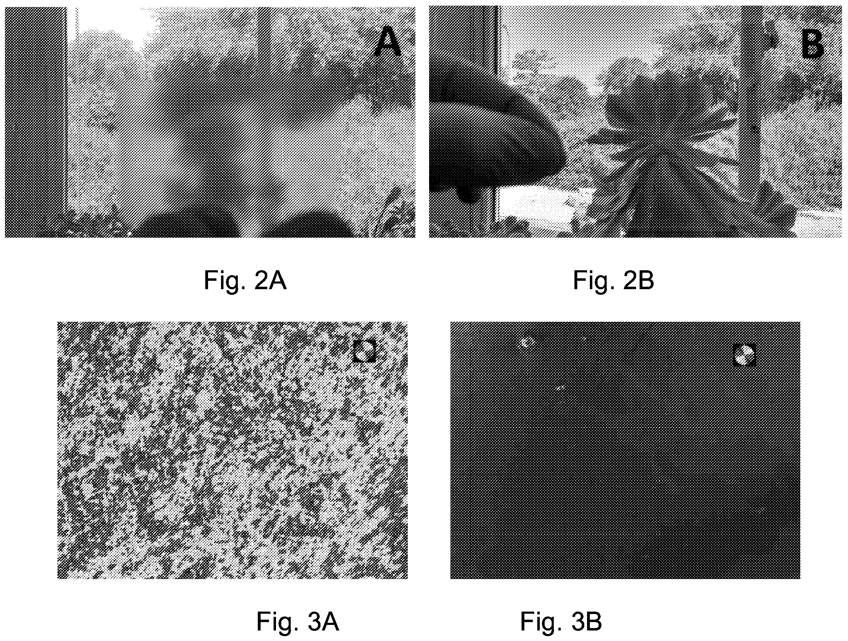

NCC/BTCA/SHP was also used to make high quality NCC films. As the results obtained to date show, crosslinked films exhibited unexpected enhancement in the mechanical properties in comparison to regular NCC films **(****Fig. 1****),** and is more transparent than uncrosslinked films **(****Fig. 2****).**

The alignment of the NCC in the films was explored using polarized optical microscopy (POM) coupled with an image processing module that can confer the direction of sample alignment. **Fig. 3** shows the processed birefringence images. NCC films presented in **Fig. 3A** are birefringent and show the typical fragmented, multi-domain order that is characteristic of NCC films. In contrast, films of crosslinked NCC **(****Fig. 3B****)** appear uniformly birefringent and the polarized microscopy image processing technique interprets long-range nematic order. Furthermore, the NCC films were chiral nematic (i.e., fingerprint pattern seen in POM images), whereas the order in the crosslinked films was nematic. Assuming a screw-like shape/surface feature (right-handed) is responsible for the chiral nematic ordering of NCC, possibly the BTCA obscures the shape-effect. Possibly, the crosslinking process responsible for the long-range, unidirectional alignment observed in the NCC/BTCA/SHP films. The BTCA/SHP crosslinking driven particle alignment in suspension and films and locks the structure when it is still in the liquid crystal phase that unexpectedly generate uniform long-range order which affects and extremely enhances the transparency and the mechanical properties of the cross linked NCC films.

The large surface area of NCC particles and the unique properties of the NCC combined with this novel environmental friendly nontoxic crosslinking method leads to much better crosslinking levels than those in whole cellulose fibers, and improve the mechanical properties and stability of cellulose based materials and composite, with potential for uses in wide range of industrial applications.

### BRIEF DISCUSSION OF DRAWINGS

**Fig. 1** shows the tensile testing of crosslinked and uncrosslinked NCC films.
Figs. 2A-B demonstrate the reduced transparency of an uncrosslinked NCC film **(****Fig. 2A****)** with the superior transparency of a crosslinked NCC film **(****Fig. 2B****).**
Figs. 3A-B show the result of the LC-PolScope^{™} birefringence analysis performed on Polarized optical microscopy images: **Fig. 3A****:** NCC films show multi-domain orientation. **Fig. 3B****:** NCC/BTCA/SHP films show unidirectional long-range order.

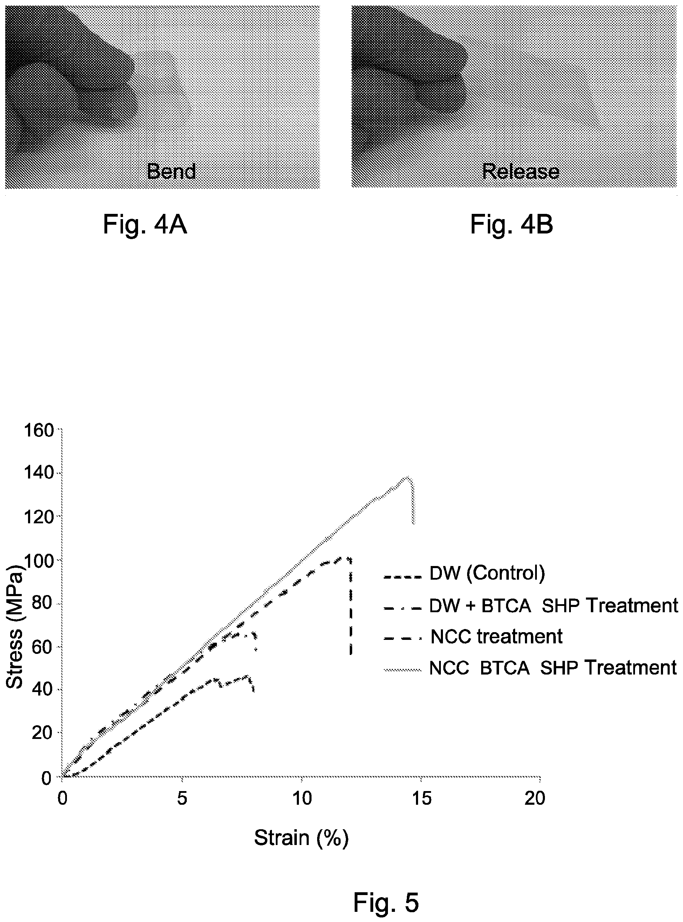

Figs. 4A-B demonstrates the mechanical stability of a film of a crosslinked NCC under bending **(****Fig. 4A****)** and subsequent release **(****Fig. 4B****).**
**Fig. 5** demonstrates the results of a tensile testing of crosslinked and uncrosslinked cotton fibers.

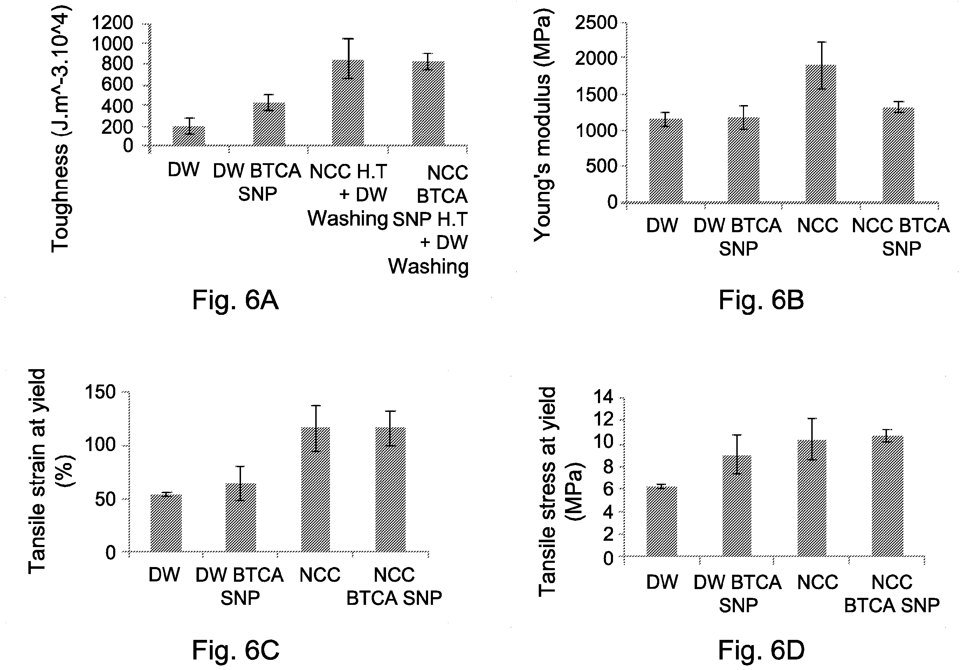

Figs. 6A-D present the results from Instron tensile testing of treated and untreated cotton fibers samples: **(****Fig. 6A****)** toughness, **(****Fig. 6B****)** automatic modulus, **(****Fig. 6C****)** tensile strength at yield, and **(****Fig. 6D****)** tensile strain at yield. Toughness is the area under the stress-strain curve, and tensile strength and tensile strain, are the maximum stress and strain that the fibers could withstand before break. Data points are an average from the measurement of 3-8 cotton fibers, and error bars are calculated using a *Student's t-test.*
**Fig. 7** illustrates an examplary method of applying a formulation according to the invention.

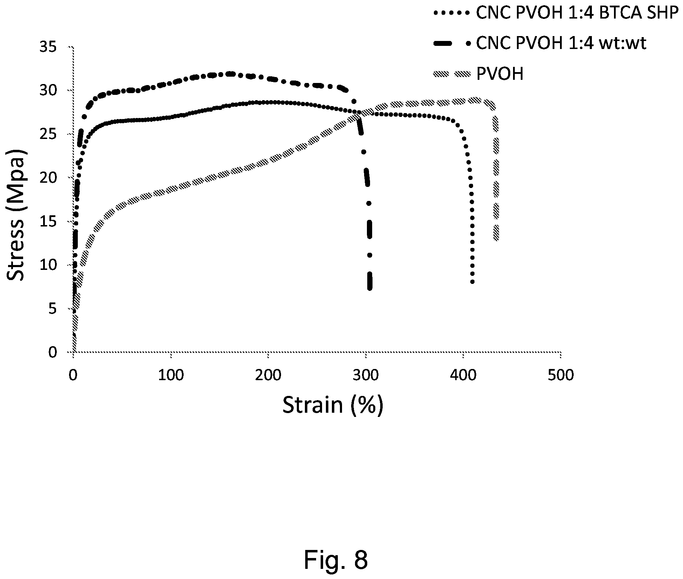

**Fig. 8** demonstrates the results of a tensile testing of crosslinked and uncrosslinked CNC/PVOH films. Uncrosslinked films show high modulus and tensile stress but low elongation. PVOH films show lower modulus and tensile strength but higher tensile strain. Crosslinked NCC/PVOH films show high modulus and high tensile strain, resulting in higher toughness (110 mJ/m³) than PVOH films (98.3 mJ/m³) and NCC/PVOH uncrosslinked films (90.9 mJ/m³).

### DETAILED DESCRIPTION OF THE INVENTION

### MATERIALS AND METHODS

**Materials:** Polyethylenimine solution (50 % (w/v) in H₂O, Sigma-Aldrich), polyvinyl alcohol (PVOH) (Mowiol - Mw = 30,000-195,000 g/mol, Sigma-Aldrich), Sepiolite (Sigma).

### Sample preparation:

### Methodology:

Coating experiments were performed by spray coating but any other method of NCC application (e.g. wipes, deeping, sponge, pouring, splash) is also possible. The NCC formulation was sprayed onto clean glass slides, or other substrates, by a hand sprayer or airbrush at rt. The distance between the sprayer and the glass slide was approximately 10-20 cm.

### Surface treatment:

Surface treatment may be needed to achieve thin, homogeneous layer of NCC coating. For substrates that showed good wetting and adhesion to NCC, surface treatment was not required.

A surface treatment may vary. For certain purposes the treatment includes application of a layer of polyethylenimine (PEI) or a commercial primer containing PEI or another positively charged polyelectrolyte.

PEI 0.2% w/v in DW (may include one or more wetting agents) or commercial primer were sprayed simultaneously against a vertically oriented polycarbonate slide, following by drying for 1-2 min at rt and washing with distilled water. Finally, the slide was dried at rt or by hot air.

### NCC crosslinked films preparation (for reference):

10 mM 1,2,3,4-butanetetracarboxylic (BTCA) powder (Sigma) and 5 mM Sodium hypophosphite monohydrate (Sigma) were dissolved in NCC suspension (2.5 wt.%). The suspension was gently mixed and 15 ml of NCC/BTCA/SHP suspension was cast onto a Sigmacote^{®} treated glass substrates. The NCC/BTCA/SHP suspension was dried for 48h under ambient conditions until constant weight was achieved.

### 1. NCC/PVOH crosslinked coating films preparation:

10 mM 1,2,3,4-butanetetracarboxylic (BTCA) powder (Sigma) and 5 mM Sodium hypophosphite monohydrate (Sigma) were dissolved in NCC suspension (2 wt.*%*). PVOH suspension (20%) was added to the NCC suspension to achieve a required ration (for example 1:1 wt. CNC:PVOH). The formula was sonicated using a probe sonicator and applied using a rod-coater onto a corona treated BOPP film. The coating was dried at rt to get a thin, dry crosslinked NCC/PVOH coating.

### 2. Hygroscopic NCC crosslinked films preparation (for reference):

10 mM 1,2,3,4-butanetetracarboxylic (BTCA) powder (Sigma) and 5 mM Sodium hypophosphite monohydrate (Sigma) dissolved into NCC suspensions (2.5 wt.%). Fumed silica (5% wt. of NCC) was added to the suspension. The suspension was gently mixed and 15 ml of the suspension was cast onto a Sigmacote^{®} treated glass substrates. The suspension was dried for 48h under ambient conditions until constant weight was achieved.

### 3. Hygroscopic crosslinked NCC coating films preparation (for reference):

10 mM 1,2,3,4-butanetetracarboxylic (BTCA) powder (Sigma) and 5 mM Sodium hypophosphite monohydrate (Sigma) were dissolved in NCC suspension (2 wt.%). Fumed silica (5% wt. of NCC) was added to the suspension. The suspension was mixed and applied using a rod-coater onto a corona treated BOPP film. The coating was dried at rt to get a thin, dry hygroscopic crosslinked NCC coating

### 4. Hygroscopic NCC coating films preparation (for reference):

Sepiolite (5% wt. of NCC, Sigma) was added to an NCC suspension (2 wt.%). The suspension was mixed and applied by spraying onto a vertically oriented polycarbonate slide that was surface treated with PEI. The coating was dried at rt to get a thin, dry hygroscopic NCC coating on the polycarbonate.

### 5. Cotton fibers reinforcement treatment (for reference):

Untreated cotton fibers were incubated in NCC suspensions (2.5 wt.%) containing 10 Mm 1,2,3,4-butanetetracarboxylic (BTCA) powder (Sigma) and 5 mM sodium hypophosphite monohydrate (Sigma) for 12h at rt. In the next step the cotton fibers heat treated (170 ° C, 3 min) followed by washing with DW.

## Claims

1. A method for modifying film oxygen transmittance rate of a solid film or coat comprising or consisting nanocrystalline cellulose (NCC), the method comprising:
- forming onto at least a surface region of a substrate a film or a coat of a formulation comprising
(a) NCC,
(b) an additive composition and
(c) at least one crosslinking agent and optionally at least one catalyst;
the additive composition consisting at least one -OH-rich material selected from sorbitol, polyvinyl alcohol (PVOH), polycarboxylate ether, carbohydrates and borax, and at least one hygroscopic material selected from cellulosic materials, carbohydrates, alcohols, acids and inorganic salts, wherein the ratio of the at least one OH-rich material to the at least one hygroscopic material is from 0.01:1 to 1:0.01 (w/w), and
- allowing said film or coat to form into a solid film or coat;
wherein the oxygen transmittance rate is modified in relation to a film or a coat consisting NCC.

2. The method according to claim 1, further comprising preparing a formulation comprising (a) the NCC, (b) the additive composition and (c) the at least one crosslinking agent and optionally the at least one catalyst.

3. The method according to claim 1, wherein the ratio of the at least one OH-rich material to the at least one hygroscopic material is 0.1:1, 1:1, or 1:0.1.

4. The method according to any of claims 1 to 3, wherein the OH-rich material is polyvinyl

5. The method according to claim 1, wherein the crosslinking agent is selected from homo-functional, hetero-functional and photoreactive crosslinking agents.

6. The method according to claim 5, wherein the crosslinking agent is selected from polycarboxylic anhydrides, polycarboxylic acids, citric acid, polyacrylic acid, acrylic acid, acrylates monomer, acrylates prepolymers, oxidized cellulose, carboxymethyl cellulose, epoxides, polyurethanes prepolymers, formaldehyde, glyoxal, glutaraldehyde, α-hydroxy hexanedial, formamide, acetamide and N,N-methylene diacrylamide.

7. The method according to claim 1, wherein the crosslinking agent is a polycarboxylic acid.

8. The method according to claim 1, for forming a film comprising NCC and xyloglucan, the film having OTR of between 1 and 2, when measured at rt and 0% relative humidity.

9. The method according to claim 1, for forming a film comprising NCC and starch, the film having OTR between 1 and 5, when measured at rt and 0% relative humidity; and OTR below 10, when measured at rt and 50% relative humidity.

10. The method according to claim 1, for forming a film comprising NCC crosslinked with BTCA, the film having OTR lower than 1, or between 1 and 2, when measured at rt and 0% relative humidity; and OTR of about 60 when measured at rt and 50% humidity.

11. The method according to claim 1, for forming a film comprising NCC crosslinked with BTCA and PVOH, the film having OTR lower than 1 or between 1 and 2, when measured at rt and 0% relative humidity; and OTR lower than 1, or between 1 and 2, or between 0 and 0.5, when measured at rt and 50% relative humidity.

12. The method according to claim 1, for forming a film comprising NCC and PVOH, the film having OTR lower than 30, when measured at rt and 0% relative humidity; and when measured at 50% relative humidity.

13. The method according to any one of claims 1 to 12, wherein the method is for improving the film oxygen transmittance rate of the solid film or coat.

## Patentansprüche

1. Ein Verfahren zum Modifizieren der Filmsauerstoffdurchlässigkeitsrate eines festen Films oder einer festen Beschichtung, der/die nanokristalline Cellulose (NCC) umfasst oder daraus besteht, wobei das Verfahren umfasst:
- Bilden auf mindestens einem Oberflächenbereich eines Substrats einen Film oder eine Beschichtung aus einer Formulierung, umfassend
(a) NCC,
(b) eine Zusatzstoffzusammensetzung und
(c) mindestens ein Vernetzungsmittel und gegebenenfalls mindestens einen Katalysator; wobei die Additivzusammensetzung aus mindestens einem -OH-reichen Material, ausgewählt aus Sorbit, Polyvinylalkohol (PVOH), Polycarboxylatether, Kohlenhydraten und Borax, und mindestens einem hygroskopischen Material, ausgewählt aus Cellulosematerialien, Kohlenhydraten, Alkoholen, Säuren und anorganischen Salzen besteht, wobei das Verhältnis des mindestens einen OH-reichen Materials zu dem mindestens einen hygroskopischen Material 0,01:1 bis 1:0,01 (Gew./Gew.) beträgt, und
- den Film oder die Beschichtung zu einem festen Film oder einer festen Beschichtung werden lassen;
wobei die Sauerstoffdurchlässigkeitsrate bezogen auf einen Film oder eine Beschichtung, bestehend aus NCC, modifiziert wird.

2. Das Verfahren nach Anspruch 1 ferner umfassend die Herstellung einer Formulierung, umfassend (a) die NCC, (b) die Additivzusammensetzung und (c) das mindestens eine Vernetzungsmittel und gegebenenfalls den mindestens einen Katalysator.

3. Das Verfahren nach Anspruch 1, wobei das Verhältnis des mindestens einen OH-reichen Materials zu dem mindestens einen hygroskopischen Material 0,1:1, 1:1 oder 1:0,1 beträgt.

4. Das Verfahren nach einem der Ansprüche 1 bis 3, wobei das OH-reiche Material Polyvinylalkohol (PVOH) ist.

5. Das Verfahren nach Anspruch 1, wobei das Vernetzungsmittel ausgewählt ist aus homofunktionellen, heterofunktionellen und photoreaktiven Vernetzungsmitteln.

6. Das Verfahren nach Anspruch 5, wobei das Vernetzungsmittel ausgewählt ist aus Polycarbonsäureanhydriden, Polycarbonsäuren, Zitronensäure, Polyacrylsäure, Acrylsäure, Acrylatmonomer, Acrylatvorpolymeren, oxidierter Cellulose, Carboxymethylcellulose, Epoxiden, Polyurethan-Vorpolymeren, Formaldehyd, Glyoxal, Glutaraldehyd, α-Hydroxyhexandial, Formamid, Acetamid und N,N-Methylendiacrylamid.

7. Das Verfahren nach Anspruch 1, wobei das Vernetzungsmittel eine Polycarbonsäure ist.

8. Das Verfahren nach Anspruch 1 zum Bilden eines Films, umfassend NCC und Xyloglucan, wobei der Film einen OTR-Wert zwischen 1 und 2 aufweist, wenn er bei RT und 0 % relativer Feuchte gemessen wird.

9. Das Verfahren nach Anspruch 1 zum Bilden eines Films, umfassend NCC und Stärke, wobei der Film einen OTR zwischen 1 und 5 aufweist, wenn er bei RT und 0 % relativer Feuchte gemessen wird; und einen OTR unter 10, wenn er bei RT und 50 % relativer Feuchte gemessen wird.

10. Das Verfahren nach Anspruch 1 zum Bilden eines Films, umfassend mit BTCA vernetztes NCC, wobei der Film einen OTR von weniger als 1 oder zwischen 1 und 2 aufweist, wenn er bei RT und 0 % relativer Feuchte gemessen wird; und einen OTR von etwa 60, wenn er bei RT und 50 % Feuchte gemessen wird.

11. Das Verfahren nach Anspruch 1 zum Bilden eines Films, umfassend mit BTCA und PVOH vernetztes NCC, wobei der Film einen OTR von weniger als 1 oder zwischen 1 und 2 aufweist, wenn er bei RT und 0 % relativer Feuchte gemessen wird; und einen OTR von weniger als 1, oder zwischen 1 und 2 oder zwischen 0 und 0,5, wenn er bei RT und 50 % relativer Feuchte gemessen wird.

12. Das Verfahren nach Anspruch 1 zum Bilden eines Films, umfassend NCC und PVOH, wobei der Film einen OTR von weniger als 30 aufweist, wenn er bei RT und 0 % relativer Feuchte gemessen wird; und wenn er bei 50 % relativer Feuchte gemessen wird.

13. Das Verfahren nach einem der Ansprüche 1 bis 12, wobei das Verfahren zur Verbesserung der Filmsauerstoffdurchlässigkeitsrate des festen Films oder der festen Beschichtung dient.

## Revendications

1. Méthode pour modifier le taux de transmission de l'oxygène à travers le film d'un film ou revêtement solide, comprenant ou consistant en une cellulose nanocristalline (NCC), la méthode comprenant :
- la formation, sur au moins une région de surface d'un substrat, d'un film ou d'un revêtement ayant une formulation comprenant
(a) une NCC,
(b) une composition d'additifs, et
(c) au moins un agent de réticulation et éventuellement au moins un catalyseur ;
la composition d'additifs consistant en au moins un matériau riche en -OH choisi parmi le sorbitol, le poly(alcool vinylique) (PVOH), un polycarboxylate-éther, les hydrates de carbone et le borax, et au moins un matériau hygroscopique choisi parmi les matériaux cellulosiques, les hydrates de carbone, les alcools, les acides et les sels inorganiques, dans laquelle le rapport de l'au moins un matériau riche en OH à l'au moins un matériau hygroscopique est de 0,01/1 à 1/0,01 (p/p), et
- le fait de laisser ledit film ou revêtement se mettre sous la forme d'un film ou revêtement solide ;
dans laquelle le taux de transmission de l'oxygène est modifié en relation avec un film ou revêtement consistant en une NCC.

2. Méthode selon la revendication 1, comprenant en outre la préparation d'une formulation comprenant (a) la NCC, (b) la composition d'additifs et (c) l'au moins un agent de réticulation et éventuellement l'au moins un catalyseur.

3. Méthode selon la revendication 1, dans laquelle le rapport de l'au moins un matériau riche en OH à l'au moins un matériau hygroscopique est de 0,1/1, 1/1, ou 1/0,1.

4. Méthode selon l'une quelconque des revendications 1 à 3, dans laquelle le matériau riche en OH est le poly(alcool vinylique) (PVOH).

5. Méthode selon la revendication 1, dans laquelle l'agent de réticulation est choisi parmi les agents de réticulation homofonctionnels, hétérofonctionnels et photoréactifs.

6. Méthode selon la revendication 5, dans laquelle l'agent de réticulation est choisi parmi les anhydrides polycarboxyliques, les acides polycarboxyliques, l'acide citrique, le poly(acide acrylique), l'acide acrylique, les monomères acrylates, les prépolymères d'acrylate, la cellulose oxydée, la carboxyméthylcellulose, les époxydes, les prépolymères de polyuréthane, le formaldéhyde, le glyoxal, le glutaraldéhyde, l'α-hydroxyhexanedial, le formamide, l'acétamide et le N,N-méthylènediacrylamide.

7. Méthode selon la revendication 1, dans laquelle l'agent de réticulation est un acide polycarboxylique.

8. Méthode selon la revendication 1, pour former un film comprenant une NCC et du xyloglucane, le film ayant un OTR compris entre 1 et 2, quand il est mesuré à la température ambiante et sous une humidité relative de 0 %.

9. Méthode selon la revendication 1, pour former un film comprenant une NCC et de l'amidon, le film ayant un OTR compris entre 1 et 5, quand il est mesuré à la température ambiante et sous une humidité relative de 0 % ; et un OTR inférieur à 10, quand il est mesuré à la température ambiante et sous une humidité relative de 50 %.

10. Méthode selon la revendication 1, pour former un film comprenant une NCC réticulée avec du BTCA, le film ayant un OTR inférieur à 1, ou compris entre 1 et 2, quand il est mesuré à la température ambiante et sous une humidité relative de 0 % ; et un OTR d'environ 60 quand il est mesuré à la température ambiante et sous une humidité de 50 %.

11. Méthode selon la revendication 1, pour former un film comprenant une NCC réticulée avec du BTCA et du PVOH, le film ayant un OTR inférieur à 1, ou compris entre 1 et 2, quand il est mesuré à la température ambiante et sous une humidité relative de 0 % ; et un OTR inférieur à 1, ou compris entre 1 et 2, ou entre 0 et 0,5, quand il est mesuré à la température ambiante et sous une humidité relative de 50 %.

12. Méthode selon la revendication 1, pour former un film comprenant une NCC et du PVOH, le film ayant un OTR inférieur à 30, quand il est mesuré à la température ambiante et sous une humidité relative de 0 % ; et quand il est mesuré sous une humidité relative de 50 %.

13. Méthode selon l'une quelconque des revendications 1 à 12, laquelle méthode est destinée à améliorer le taux de transmission de l'oxygène à travers le film d'un film ou revêtement solide.
